# EUROPÄISCHE PATENTSCHRIFT

(11) **EP 2 189 055 B1**
(45) Veröffentlichungstag und Bekanntmachung des Hinweises auf die Patenterteilung: **01.04.2015**
(21) Anmeldenummer: 09014545.9
(22) Anmeldetag: 23.11.2009
(51) Int. Cl.: A01G 3/037, A01G 3/053, H02K 7/02, H02K 7/116

(54) **Elektrohandwerkzeuggerät**
Electric hand tool
Machine-outil électrique manuelle

(30) Priorität: 21.11.2008 DE 102008058479
(43) Veröffentlichungstag der Anmeldung: 26.05.2010
(73) Patentinhaber: Metabowerke GmbH, 72622 Nürtingen (DE)
(72) Erfinder: Seyerle, Jörg, 73257 Köngen (DE)
(74) Vertreter: Raunecker, Klaus Peter

(56) Entgegenhaltungen:
- EP-A1- 1 795 066
- DE-A1- 3 742 004
- DE-A1- 3 815 651

## Beschreibung

Die Erfindung betrifft ein akkubetriebenes Elektrohandwerkzeuggerät in Form eines Schneidgeräts für Sträucher und Äste, mit einem Elektromotor und mit einem rotierenden Schneidmesser, gemäß dem Oberbegriff von Anspruch 1.

Ein solches Gerät ist beispielsweise aus EP 1795066 bekannt.

Es gibt insbesondere akkubetriebene Elektrohandwerkzeuggeräte mit verhältnismäßig klein bauenden Elektromotoren, die demzufolge auch nur ein begrenztes Drehmoment aufweisen, weil dies für die intendierte Anwendung größtenteils ausreichend ist. Bei derartigen Elektrohandwerkzeuggeräten ist man gleichwohl bestrebt, ein großes Schwungmoment zu erreichen, also eine große Schwungenergie beim Betrieb des Elektrohandwerkzeuggeräts aufzubauen, damit im Betrieb auftretende Widerstände aufgrund der Energie der rotierenden Massen überwunden werden können, beispielsweise wenn bei Schneidgeräten für Sträucher oder dergleichen mitunter größere Widerstände bei etwas dickeren Ästen überwunden werden müssen, so dass ein Stillsetzen des Elektrohandwerkzeuggeräts vermieden wird. Bislang wurden hierfür auf der Abtriebsseite des Elektromotors massereiche Zahnräder verwendet. Dies vergrößert jedoch den Getrieberaum des Elektrohandwerkzeuggeräts beträchtlich, was sich aus verschiedenen Gründen als nachteilig erweist, da der Getrieberaum stets in einem der Werkzeugansetzstelle benachbarten Bereich des Geräts angeordnet ist. Außerdem sind die dort vorhandenen konstruktiven Freiheitsgrade eher begrenzt.

Der vorliegenden Erfindung liegt die Aufgabe zugrunde, ein Elektrohandwerkzeuggerät der genannten Art so auszubilden, dass auch bei Verwendung eines kleinen Elektromotors ein verhältnismäßig großes Schwungmoment und hohe Schwungenergie im Betrieb realisiert werden kann, wobei eine einfache und zweckmäßige Herstellbarkeit des Geräts erreicht werden soll.

Diese Aufgabe wird erfindungsgemäß gelöst durch ein akkubetriebenes Elektrohandwerkzeuggerät in Form eines Schneidgeräts für Sträucher und Äste, mit einem einen Handgriff bildenden Gehäuseteil und einem einen Elektromotor mit Ankerwelle und einen Getriebebereich aufnehmenden Gehäuseteil, wobei die Ankerwelle eine Getriebeseite und eine Kollektorseite aufweist, und mit einem um eine Umdrehungsachse rotierenden Schneidmesser, wobei der Elektromotor und dessen Ankerwelle parallel zu der Umdrehungsachse des Schneidmessers angeordnet ist und so bezüglich des im wesentlichen in einer horizontalen Orientierung erstreckten Handgriffs im wesentlichen vertikal orientiert ist, und wobei die Ankerwelle oder ein die Ankerwelle in einer axialen Richtung verlängernder angefügter Wellenabschnitt auf der vom Getriebebereich abgewandten Kollektorseite eine Schwungmasse aufweist.

Dadurch, dass die Schwungmasse auf der vom Getrieberaum oder Getriebebereich des Elektrohandwerkzeuggeräts abgewandten Seite des Elektromotors vorgesehen wird, steht einerseits unproblematisch ein größerer Bauraum für die Schwungmasse zur Verfügung, als dies im Bereich des Getrieberaums und im Bereich des Werkzeugs bzw. einer Werkzeugansetzstelle des Elektrohandwerkzeuggeräts der Fall ist. Es lässt sich auf die erfindungsgemäße Art und Weise verhältnismäßig unproblematisch eine auch ausladende Schwungmasse rotierend an der Ankerwelle oder an dem die Ankerwelle axial verlängernden Wellenabschnitt anbringen und so eine hohe Schwungenergie im Betrieb des Elektrohandwerkzeuggeräts erreichen.

Nach einer bevorzugten Ausführungsform der Erfindung erstreckt sich die Ankerwelle oder der angefügte Wellenabschnitt auf der Kollektorseite durch ein Wellenlager des Elektromotors hindurch nach außerhalb eines Gehäuses des Elektromotors, so dass die Schwungmasse außerhalb des Gehäuses des Elektromotors auf der Ankerwelle oder auf dem Wellenabschnitt angeordnet ist. Dies ist zweckmäßig, da auf diese Weise die grundsätzliche Konstruktion und das Gehäuse des klein bauenden Elektromotors beibehalten werden kann; es muss lediglich die Ankerwelle verlängert werden, um die Schwungmasse anzubringen. Grundsätzlich wäre es aber auch denkbar, dass die Schwungmasse innerhalb eines Gehäuses des Elektromotors, jedoch gleichwohl auf der Kollektorseite der Ankerwelle oder eines die Ankerwelle verlängernden Wellenabschnitts, vorgesehen ist.

Vorteilhafterweise trägt die Ankerwelle auf ihrer Getriebeseite lediglich ein Ritzel, jedoch keine weiteren Schwungmassenelemente. Das Ritzel steht in an sich bekannter Weise in kämmender Antriebsverbindung mit weiteren Getriebekomponenten des Elektrohandwerkzeuggeräts.

Weiter erweist es sich als vorteilhaft, wenn die Schwungmasse von einer stanzpaketierten Anordnung von scheibenförmigen Abschnitten gebildet ist. Solchenfalls können die scheibenförmigen, insbesondere kreisscheibenförmigen Abschnitte aus einem eher dünnen Blech ausgestanzt werden. Sie werden dann übereinander gestapelt und miteinander durch einen alle Abschnitte erfassenden Stanz/Pressvorgang verbunden. Hierfür wird ein Abschnitt nach dem anderen auf den von den vorhergehenden Abschnitten gebildeten Stapel gelegt und dann durch einen Pressvorgang mit dem Stapel verbunden. Vorzugsweise wird der jeweilige oben aufgelegte Abschnitt in eine Vertiefung an der Oberseite des Stapels nach Art eines Tiefziehvorgangs hineingedrückt und in der Vertiefung verstemmt.

Die Schwungmasse könnte in an sich beliebiger Weise, jedoch vorzugsweise unwuchtfrei, auf der Ankerwelle oder dem Wellenabschnitt vorgesehen sein. Sie ist in Weiterbildung der Erfindung vorteilhafterweise auf die Ankerwelle oder den Wellenabschnitt aufgepresst, was sich herstellungstechnisch einfach und daher kostengünstig ausführen lässt.

In weiterer Ausbildung der Erfindung erweist es sich als vorteilhaft, wenn die Schwungmasse formschlüssig verdrehfest auf der Ankerwelle angeordnet ist. Hierfür könnte die Ankerwelle einen unrunden, insbesondere polygonalen Außenumfang haben. Eine Öffnung in der Schwungmasse könnte weiter in vorteilhafter Weise vor dem Aufpressen auf die Ankerwelle mit Untermaß gegenüber dem Außenumfang der Ankerwelle ausgebildet sein, so dass sich beim Aufpressen eine formschlüssig verdrehfeste Anordnung ergibt.

Die Schwungmasse ist vorzugsweise derart auf der Ankerwelle oder dem Wellenabschnitt vorgesehen, insbesondere aufgepresst, dass sie sich erst bei einer Abzugskraft von wenigstens 1000 N lösen lässt.

Die Schwungmasse weist vorzugsweise eine Masse von 10 - 40 g, insbesondere von 15 - 30 g und weiter insbesondere von 20 - 30 g auf. Des Weiteren erweist es sich als vorteilhaft, wenn die Schwungmasse einen Außendurchmesser von 10 - 35 mm, insbesondere von 15 - 30 mm, insbesondere von 15 - 25 mm aufweist.

Weiter erweist es sich als vorteilhaft, wenn die Schwungmasse eine axiale Erstreckung von 5 - 25 mm, insbesondere von 5 - 20 mm, insbesondere von 5 - 15 mm, insbesondere von 8 - 15 mm aufweist.

Der hier in Rede stehende verhältnismäßig klein bauende Elektromotor ist insbesondere und vorteilhafterweise so ausgebildet, dass ein Außendurchmesser eines Stator und Rotor aufnehmenden Gehäuses des Elektromotors in der Ebene senkrecht zur Ankerwelle 25 - 50 mm, insbesondere 25 - 40 mm, insbesondere 30 - 40 mm beträgt. Die Erstreckung eines Stator und Rotor aufnehmenden Gehäuses des Elektromotors in Richtung der Ankerwelle beträgt 40 - 80 mm, insbesondere 40 - 70 mm, insbesondere 40 - 60 mm, insbesondere 40 - 55 mm.

Weitere Einzelheiten, Merkmale und Vorteile der Erfindung ergeben sich aus den beigefügten Patentansprüchen und aus der zeichnerischen Darstellung und nachfolgenden Beschreibung einer bevorzugten Ausführungsform eines erfindungsgemäßen Elektrohandwerkzeuggeräts. In der Zeichnung zeigt:
- Figur 1: eine Seitenansicht (mit abgenommener Gehäusehalbschale) eines erfindungsgemäßen Schneidgeräts für Sträucher;
- Figur 2: eine perspektivische Ansicht eines Elektromotors des Schneidgeräts nach Figur 1; und
- Figur 3: eine Seitenansicht des Elektromotors nach Figur 2.

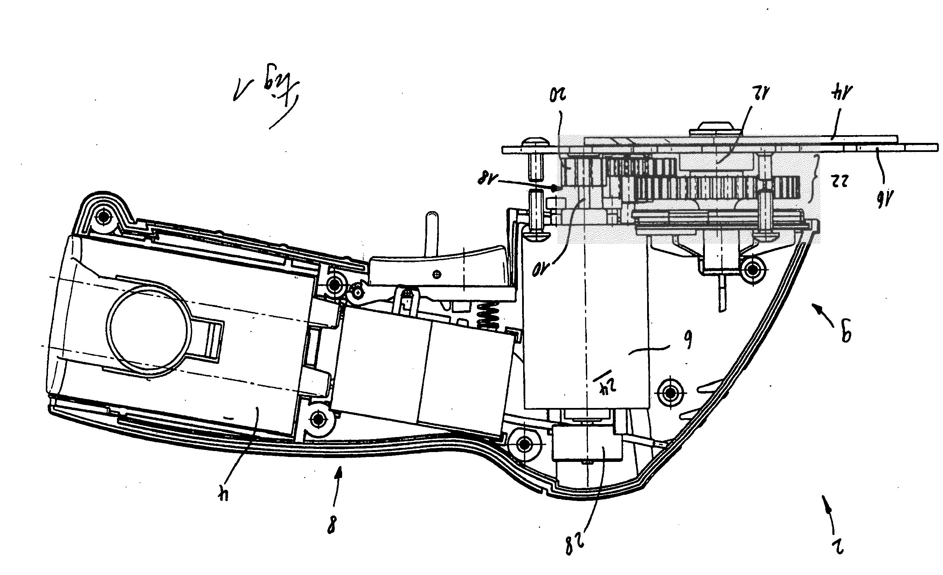

Figur 1 zeigt ein insgesamt mit dem Bezugszeichen 2 bezeichnetes Schneidgerät für Sträucher oder kleine Äste. Das Schneidgerät 2 umfasst einen einsteckbaren Wechselakku 4 und einen hierdurch mit elektrischer Energie versorgten Elektromotor 6, der verhältnismäßig klein baut und bezüglich eines im Wesentlichen in einer horizontalen Orientierung dargestellten einen Handgriff bildenden Gehäuseteils 8 des Schneidgeräts 2 vertikal orientiert und in einem auch den Getriebebereich 22 aufnehmenden Gehäuseteil 9 angeordnet ist. Eine sich durch den Elektromotor 6 hindurch erstreckende Ankerwelle 10 ist somit parallel zu einer Umdrehungsachse 12 eines exzentrisch rotierend antreibbaren Schneidmessers 14 des Schneidgeräts 2 angeordnet. Das Schneidmesser 2 rotiert exzentrisch bezüglich einem weiteren, jedoch bei der beispielhaft dargestellten Ausführungsform still stehenden Messer 16 mit randoffenen Ausnehmungen zur Aufnahme des Schnittguts.

Zwischen einem auf einer Getriebeseite 18 der Ankerwelle 10 sitzenden Ritzel 20 und dem rotierend antreibbaren Schneidmesser 14 ist der insgesamt mit dem Bezugszeichen 22 bezeichnete Getriebebereich des Schneidgeräts 2 vorgesehen. Zur besseren Veranschaulichung sind Gehäusewandbereiche des Schneidgeräts 2, welche den Getriebebereich 22 umschließen und auch im Wesentlichen schmiermitteldicht begrenzen, weggenommen.

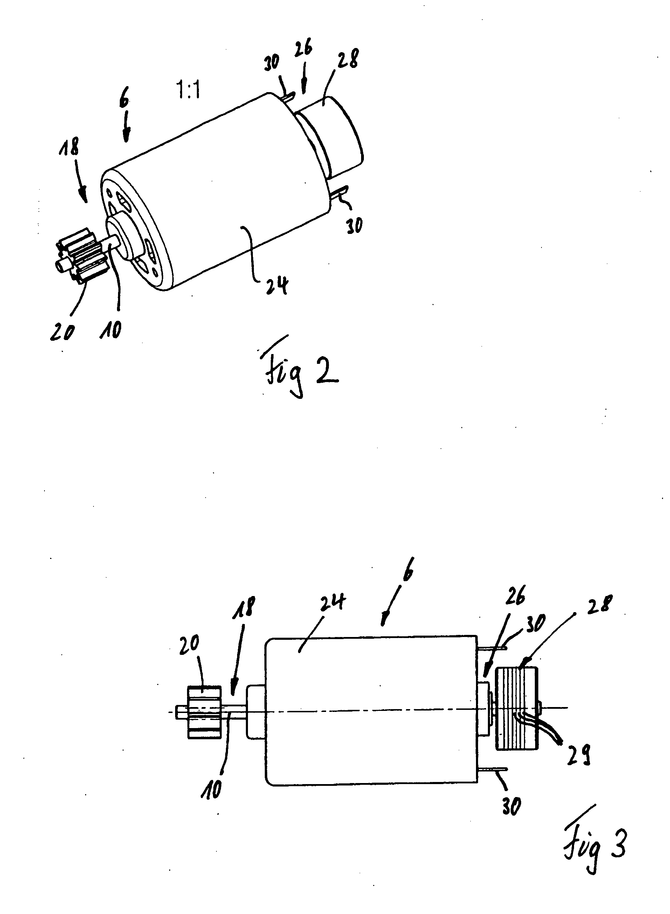

Wie sich Figur 1, aber auch den Figuren 2 und 3, die zwei Ansichten des Elektromotors 6 zeigen, entnehmen lässt, umfasst der Elektromotor 6 ein Motorgehäuse 24, welches im Wesentlichen zylindrische Gestalt aufweist. Die Ankerwelle 10 erstreckt sich auf der Getriebeseite 18 aus dem Motorgehäuse 24 heraus und trägt dort das Antriebsritzel 20. Die Ankerwelle 10 erstreckt sich aber auch auf der gegenüberliegenden Kollektorseite 26 durch ein nicht dargestelltes Wellenlager hindurch nach außerhalb des Motorgehäuses 24. Sie trägt dort eine Schwungmasse 28. Die Schwungmasse 28 ist also außerhalb des Motorgehäuses 24 auf der Ankerwelle 10, und zwar auf der Kollektorseite 26 der Ankerwelle, angeordnet. Die Schwungmasse 28 ist vorzugsweise auf das freie Ende der Ankerwelle 10 aufgepresst. Sie umfasst eine stanzpaketierte Anordnung von scheibenförmigen Abschnitten 29. Des Weiteren sind Anschlussklemmen 30 des Elektromotors 6 ersichtlich, die ebenfalls in axialer Richtung von dem Motorgehäuse 24 vorstehen. Die Kollektoranordnung selbst ist innerhalb des Motorgehäuses 24 vorgesehen.

Wie wiederum aus Figur 1 ersichtlich ist, ist die Schwungmasse 28 auf der vom Getriebebereich 22 des Schneidgeräts abgewandten Seite des Elektromotors 6 vorgesehen. Auf dieser Seite steht genügend Bauraum zur Verfügung, und es liegen dort keine Einschränkungen durch Getriebekomponenten des Getriebebereichs 22 vor. Auf diese Weise lässt sich das Schneidgerät 2 mit einem sehr preiswerten kleinen Elektromotor 6 ausstatten, der mit seiner Längsachse der Ankerwelle 10 im wesentlichen senkrecht zur Längsrichtung des den Handgriff bildenden Gehäuseteils 8 orientiert und in dem Getriebegehäuseteil 9 platzsparend untergebracht ist, wobei durch die Anordnung der Schwungmasse 28 auf der getriebeangewandten Kollektorseite dennoch ein hohes Schwungmoment und eine hohe Schwungenergie im Betrieb erreicht werden, so dass auch größere Widerstände, etwa beim Schneiden von etwas dickeren Ästen überwunden werden können.

## Patentansprüche

1. Akkubetriebenes Elektrohandwerkzeuggerät (2) in Form eines Schneidgeräts für Sträucher und Äste, mit einem einen Handgriff bildenden Gehäuseteil (8) und einem einen Elektromotor (6) mit Ankerwelle (10) und einen Getriebebereich (22) aufnehmenden Gehäuseteil (9), wobei die Ankerwelle (10) eine Getriebeseite (18) und eine Kollektorseite (26) aufweist, und mit einem um eine Umdrehungsachse (12) rotierenden Schneidmesser (14), wobei der Elektromotor (6) und dessen Ankerwelle (10) parallel zu der Umdrehungsachse (12) des Schneidmessers (14) angeordnet ist und so bezüglich des im wesentlichen in einer horizontalen Orientierung erstreckten Handgriffs im wesentlichen vertikal orientiert ist, **dadurch gekennzeichnet dass** die Ankerwelle (10) oder ein die Ankerwelle in einer axialen Richtung verlängernder angefügter Wellenabschnitt auf der vom Getriebebereich (22) abgewandten Kollektorseite (26) eine Schwungmasse (28) aufweist.

2. Elektrohandwerkzeuggerät nach Anspruch 1, **dadurch gekennzeichnet, dass** sich die Ankerwelle (10) oder der angefügte Wellenabschnitt auf der Kollektorseite (26) durch ein Wellenlager hindurch nach außerhalb eines Gehäuses (24) des Elektromotors (6) erstreckt, so dass die Schwungmasse (28) außerhalb des Gehäuses (24) des Elektromotors (6) auf der Ankerwelle (10) oder dem Wellenabschnitt angeordnet ist.

3. Elektrohandwerkzeuggerät nach Anspruch 1 oder 2,
**dadurch gekennzeichnet, dass** die Ankerwelle (10) auf ihrer Getriebeseite (18) lediglich ein Ritzel (20) trägt, jedoch keine weiteren Schwungmassenelemente.

4. Elektrohandwerkzeuggerät nach Anspruch 1, 2 oder 3,
**dadurch gekennzeichnet, dass** die Schwungmasse (28) von einer stanzpaketierten Anordnung von scheibenförmigen Abschnitten gebildet ist.

5. Elektrohandwerkzeuggerät nach einem oder mehreren der vorstehenden Ansprüche, **dadurch gekennzeichnet, dass** die Schwungmasse (28) auf die Ankerwelle (10) oder den Wellenabschnitt aufgepresst ist.

6. Elektrohandwerkzeuggerät nach einem oder mehreren der vorstehenden Ansprüche, **dadurch gekennzeichnet, dass** die Schwungmasse (28) formschlüssig verdrehfest auf der Ankerwelle (6) angeordnet ist.

7. Elektrohandwerkzeuggerät nach einem oder mehreren der vorstehenden Ansprüche, **dadurch gekennzeichnet, dass** die Schwungmasse (28) derart auf der Ankerwelle (6) oder dem Wellenabschnitt vorgesehen ist, dass sie sich erst bei einer Abzugskraft von wenigstens 1000 N lösen lässt.

8. Elektrohandwerkzeuggerät nach einem oder mehreren der vorstehenden Ansprüche, **dadurch gekennzeichnet, dass** die Schwungmasse (28) eine Masse von 10 - 40 g, insbesondere 15 - 30 g und weiter insbesondere 20 - 30 g aufweist.

9. Elektrohandwerkzeuggerät nach einem oder mehreren der vorstehenden Ansprüche, **dadurch gekennzeichnet, dass** die Schwungmasse (28) einen Außendurchmesser von 10 - 35 mm, insbesondere von 15 - 30 mm, insbesondere von 15 - 25 mm aufweist.

10. Elektrohandwerkzeuggerät nach einem oder mehreren der vorstehenden Ansprüche, **dadurch gekennzeichnet, dass** die Schwungmasse (28) eine axiale Erstreckung von 5-25 mm, insbesondere von 5 - 20 mm, insbesondere von 5 - 15 mm, insbesondere von 8 - 15 mm aufweist.

11. Elektrohandwerkzeuggerät nach einem oder mehreren der vorstehenden Ansprüche, **dadurch gekennzeichnet, dass** ein Außendurchmesser eines Stator und Rotor aufnehmenden Gehäuses (24) des Elektromotors (6) in der Ebene senkrecht zur Ankerwelle (10) 25 - 50 mm, insbesondere 25 - 40 mm, insbesondere 30 - 40 mm beträgt.

12. Elektrohandwerkzeuggerät nach einem oder mehreren der vorstehenden Ansprüche, **dadurch gekennzeichnet, dass** die Erstreckung eines Stator und Rotor aufnehmenden Gehäuses (24) des Elektromotors (6) in Richtung der Ankerwelle (10) 40 - 80 mm, insbesondere 40 - 70 mm, insbesondere 40 - 60 mm, insbesondere 40 - 55 mm beträgt.

## Claims

1. Battery-driven electric hand tool (2) in the form of a cutting tool for shrubs and branches, with a housing section (8) forming a handle and a housing part (9) accommodating an electric motor (6) with armature shaft (10) and a gear unit section (22), wherein the armature shaft (10) has a gear unit side (18) and a collector side (26), and with a cutting blade (14) rotating about a rotation axis (12), wherein the electric motor (6) and its armature shaft (10) is arranged parallel to the rotation axis (12) of the cutting blade (14) and is oriented essentially vertically with respect to the handle extending essentially in a horizontal orientation, **characterised in that** the armature shaft (10) or an attached shaft section extending the armature shaft in an axial direction has a centrifugal mass (28) on the side of the collector (26) remote from the gear unit area (22).

2. Electric hand tool in accordance with claim 1, **characterised in that** the armature shaft (10) for the attached shaft section extends on the collector side (26) through a bearing outside a housing (24) of the electric motor (6), so that the centrifugal mass (28) is disposed outside the housing (24) of the electric motor (6) on the armature shaft (10) or the shaft section.

3. Electric hand tool in accordance with claim 1 or 2, **characterised in that** the armature shaft (10) only carries a pinion (20) on its gear unit side (18), but no additional centrifugal mass elements.

4. Electric hand tool in accordance with claim 1, 2 or 3, **characterised in that** the centrifugal mass (28) is formed by a punch-packed arrangement of disc-shaped sections.

5. Electric hand tool in accordance with one or several of the preceding claims, **characterised in that** the centrifugal mass (28) is pressed onto the armature shaft (10) or the shaft section.

6. Electric hand tool in accordance with one or several of the preceding claims, **characterised in that** the centrifugal mass (28) is arranged in an interlocking manner to prevent rotation on the armature shaft (10).

7. Electric hand tool in accordance with one or several of the preceding claims, **characterised in that** the centrifugal mass (28) is provided on the armature shaft (10) or the shaft section such that it can only be detached by a pull-off force over at least 1000 N.

8. Electric hand tool in accordance with one or several of the preceding claims **characterised in that** the centrifugal mass (28) has a mass of 10 - 40 g, in particular 15 - 30 g and more particularly 20 - 30 g.

9. Electric hand tool in accordance with one or several of the preceding claims, **characterised in that** the centrifugal mass (28) has an outside diameter of 10 - 35 mm, in particular of 15 - 30 mm, in particular of 15 - 25 mm.

10. Electric hand tool in accordance with one or several of the preceding claims, **characterised in that** the centrifugal mass (28) has an axial extension of 5 - 25 mm, in particular of 5 - 20 mm, in particular of 5- 15 mm, in particular of 8 - 15 mm.

11. Electric hand tool in accordance with one or several of the preceding claims, **characterised in that** the outside diameter of a housing (24) of the electric motor (6) accommodating a stator and rotor in a plane perpendicular to the armature shaft (10) is 25 - 50 mm, in particular 25 - 40 mm, in particular 30 - 40 mm.

12. Electric hand tool in accordance with one or several of the preceding claims, **characterised in that** the extent of a housing (24) of the electric motor (6) accommodating a stator and rotor in the direction of the armature shaft (10) is 40 - 80 mm, in particular 40 - 70 mm, in particular 40 - 60 mm, in particular 40 - 55 mm.

## Revendications

1. Machine-outil électroportative alimentée par un accumulateur (2) se présentant sous la forme d'un appareil de coupe de brindilles et de branches, comportant une carcasse (8) formant une poignée et un moteur électrique (6) avec un arbre d'induit (10) et une partie de boîtier (9) pour loger un mécanisme d'entraînement (22), dans lequel l'arbre d'induit (10) comporte un côté entraînement (18) et un côté collecteur (26) ainsi qu'un couteau de coupe (14), rotatif autour d'un axe de rotation (12), dans lequel le moteur électrique (6) et son arbre d'induit (10) sont disposés parallèlement à l'axe de rotation (12) du couteau de coupe (14) de sorte qu'il est orienté sensiblement verticalement par rapport à la poignée disposée sensiblement verticalement, **caractérisée en ce que** l'arbre d'induit (10) ou une section rapportée prolongeant l'arbre d'induit selon une direction axiale comporte un volant (28) disposé sur le côté du collecteur (26), éloigné du mécanisme d'entraînement (22).

2. Machine-outil électroportative selon la revendication 1, **caractérisée en ce que** l'arbre d'induit (10) ou la section rapportée prolongeant l'arbre d'induit du côté collecteur (26), s'étend vers l'extérieur d'un boîtier (24) du moteur électrique (6), au travers d'un roulement d'arbre, de telle manière que le volant (28) soit monté sur l'arbre d'induit (10) du moteur électrique (6) à l'extérieur du boîtier (24) du moteur électrique (6) ou sur la section rapportée.

3. Machine-outil électroportative selon la revendication 1 ou 2, **caractérisée en ce que** l'arbre d'induit (10) porte uniquement un pignon (20) sur le côté entraînement (18), toutefois sans aucun autre élément de masse d'inertie.

4. Machine-outil électroportative selon les revendications 1, 2 ou 3, **caractérisée en ce que** le volant (28) est constitué d'un assemblage de plaques découpées embouties.

5. Machine-outil électroportative selon une ou plusieurs des revendications précédentes, **caractérisée en ce que** le volant (28) est monté par sertissage sur l'arbre d'induit (10) ou sur la section rapportée.

6. Machine-outil électroportative selon une ou plusieurs des revendications précédentes, **caractérisée en ce que** le volant (28) est monté sur l'arbre d'induit (10) par verrouillage de formes complémentaires.

7. Machine-outil électroportative selon une ou plusieurs des revendications précédentes, **caractérisée en ce que** le volant (28) est monté sur l'arbre d'induit (10) ou sur la section rapportée de telle manière que son retrait ne puisse s'effectuer qu'au-delà de l'application d'une force de traction au moins égale à 1000 N.

8. Machine-outil électroportative selon une ou plusieurs des revendications précédentes, **caractérisée en ce que** le volant (28) comporte une masse de 10 - 40 g, en particulier une masse de 15 - 30 g et en outre en particulier de 20 - 30 g.

9. Machine-outil électroportative selon une ou plusieurs des revendications précédentes, **caractérisée en ce que** le volant (28) présente un diamètre extérieur de 10 - 35 mm, en particulier de 15 - 30 mm, en particulier de 15 - 25 mm.

10. Machine-outil électroportative selon une ou plusieurs des revendications précédentes, **caractérisée en ce que** le volant (28) présente une longueur axiale de 5 - 25 mm, en particulier de 5 - 20 mm, en particulier de 5 - 15 mm, en particulier de 8 - 15 mm.

11. Machine-outil électroportative selon une ou plusieurs des revendications précédentes, **caractérisée en ce que** le diamètre extérieur d'un boîtier (24) contenant un stator et un rotor du moteur électrique (6) dans le plan perpendiculaire à l'arbre d'induit (10) est de 25 - 50 mm, en particulier de 25 - 40 mm, en particulier de 30 - 40 mm.

12. Machine-outil électroportative selon une ou plusieurs des revendications précédentes, **caractérisée en ce que** la longueur d'un boîtier (24) contenant un stator et un rotor du moteur électrique (6), dans la direction de l'arbre d'induit (10), est de 40 - 80 mm, en particulier de 40 - 70 mm, en particulier de 40 - 60 mm, en particulier de 40 - 55 mm.
